# EUROPÄISCHE PATENTANMELDUNG

(11) **EP 3 926 595 A1**
(43) Veröffentlichungstag der Anmeldung: **22.12.2021**
(21) Anmeldenummer: 21179503.4
(22) Anmeldetag: 15.06.2021
(51) Int. Cl.: G08B 13/191, G08B 13/193, G01J 5/00, G02B 3/00, G01J 5/08, G01J 5/34

(54) **INFRAROTSENSORVORRICHTUNG**

(30) Priorität: 16.06.2020 DE 102020115852
(71) Anmelder: Steinel GmbH, 33442 Herzebrock-Clarholz (DE)
(72) Erfinder: NICKEL, Stanislaw, 33335 Gütersloh (DE); JELINEK, Ales, 538 03 Hermanuv Mestec (CZ); PAAR, Jiri, 560 02 Ceska Trebova (CZ); BORN, Torsten, 33813 Oerlinghausen (DE)
(74) Vertreter: Müller Hoffmann & Partner

(57) **Zusammenfassung**

Eine Sensorvorrichtung (100) zum Detektieren einer Bewegung weist mindestens zwei Infrarot-Sensoren (110) zum Erfassen von Bewegungen und mindestens zwei Multilinsenbereiche (125) mit einer Mehrzahl von Infrarot-Linsen (125) auf, die jeweils einem Infrarot-Sensor (110) zugeordnet sind. Hierbei werden Erfassungsbereiche (112) der Infrarotsensoren (110) über die Mehrzahl der Infrarot-Linsen (127) der zugeordneten Multilinsenbereiche (125) auf die jeweiligen Infrarot-Sensoren (110) abgebildet, die Erfassungsbereiche (112) der zumindest zwei Infrarot-Sensoren überlappen sich in einem Überlappgebiet (114) und InfrarotStrahlung aus dem Überlappgebiet (114) fällt entlang unterschiedlicher optischer Pfade (116) auf die zumindest zwei Infrarot-Sensoren (110). Die Infrarot-Sensoren (110) sind geeignet, durch eine Bewegung im Überlappgebiet (114) erzeugte Messwerte an eine Auswerteeinheit (130) zu übermitteln, die anhand der von den einzelnen Infrarot-Sensoren (110) gemessenen Signalstärken und deren zeitlichem Verlauf eine Winkelposition des Ortes der Bewegung relativ zu den zumindest zwei Infrarot-Sensoren (110) bestimmt.

## Beschreibung

Die vorliegende Erfindung betrifft eine Infrarotsensorvorrichtung zum Erfassen von Bewegungen.

Passiv-Infrarotsensoren (PIR-Sensoren) werden in einer Vielzahl von Anwendungen als Bewegungsmelder eingesetzt. Das Wirkprinzip von PIR-Sensoren ist es, die von einem sich im Sichtfeld des Sensors befindlichen Objekt abgestrahlte Wärme in Form von Infrarotstrahlung zu detektieren. Insbesondere die Veränderung der empfangenen Strahlung kann detektiert werden, wodurch die Erfassung von Bewegungen möglich wird.

Häufig als PIR-Sensoren verwendete pyroelektrische Sensoren weisen dazu zwei Sensorflächen auf, welche die einfallende Infrarot-Strahlung detektieren können. Vermittelt durch ein entsprechendes optisches System erfassen diese Sensorflächen die IR-Strahlung von benachbarten Raumgebieten. Einer Differenz der beiden Signale der Sensorflächen entspricht hierbei eine Differenz der Temperatur der benachbarten Raumgebiete. Bewegt sich ein Objekt durch diese Raumgebiete, ändern sich der Temperaturunterschied und damit das gemessene Differenzsignal. Auf diese Weise kann ein pyroelektrischer Sensor Bewegungen erfassen.

PIR-Sensoren arbeiten hierbei nach dem "Alles oder Nichts"-Prinzip, d.h. wird eine Bewegung an irgendeiner Stelle des Erfassungsbereichs detektiert, erzeugt der Sensor ein Erfassungssignal. Übliche PIR-Sensoren sind dementsprechend blind gegenüber der genauen Lage der Bewegung im Erfassungsbereich. Zwar gibt es Bestrebungen, dies durch die Auswertung der Signalstärke oder der Frequenz der Signalstärkenänderung eines Einzelsensors zu umgehen und daraus abzuleiten, wo im Erfassungsbereich die Bewegung stattgefunden hat. Diese Verfahren sind aber sehr ungenau und können die Position der Bewegung nicht verlässlich angeben.

Aufgabe der vorliegenden Erfindung ist daher, eine Infrarot-Sensorvorrichtung anzugeben, die es erlaubt die Lage einer Bewegung im Raum verlässlich zu erfassen. Diese Aufgabe wird durch den Gegenstand des Anspruchs 1 gelöst.

Eine Sensorvorrichtung zum Detektieren einer Bewegung kann mindestens zwei Infrarot-Sensoren zum Erfassen von Bewegungen und mindestens zwei Multilinsenbereiche mit einer Mehrzahl von Infrarot-Linsen aufweisen, die jeweils einem Infrarot-Sensor zugeordnet sind. Hierbei werden Erfassungsbereiche der Infrarotsensoren über die Mehrzahl der Infrarot-Linsen der zugeordneten Multilinsenbereiche auf die jeweiligen Infrarot-Sensoren abgebildet. Die Erfassungsbereiche der zumindest zwei Infrarot-Sensoren überlappen sich dabei in einem Überlappgebiet und Infrarot-Strahlung aus dem Überlappgebiet fällt entlang unterschiedlicher optischer Pfade auf die zumindest zwei Infrarot-Sensoren. Die Infrarot-Sensoren sind dabei geeignet, durch eine Bewegung im Überlappgebiet erzeugte Messwerte an eine Auswerteeinheit zu übermitteln, die anhand der von den einzelnen Infrarot-Sensoren gemessenen Signalstärken und deren zeitlichem Verlauf eine Winkelposition des Ortes der Bewegung relativ zu den zumindest zwei Infrarot-Sensoren bestimmt.

Die Sensorvorrichtung weist also eine Mehrzahl von IR-Sensoren auf, wie z.B. pyroelektrische Sensoren. Deren üblicherweise einem Pyramidenstumpf entsprechendes Sichtfeld wird in an sich bekannter Weise durch eine Vielzahl von IR-Linsen aufgespalten, sodass sich ein Erfassungsbereich für jeden IR-Sensor ergibt, der aus einer Vielzahl von nebeneinander angeordneten Sichtstrahlen besteht, entlang denen IR-Strahlung auf den entsprechenden IR-Sensor fällt. Jedem IR-Sensor ist hierbei ein Bereich von IR-Linsen zugeordnet, d.h. ein Multilinsenbereich, der die aus dem Erfassungsbereich einfallende IR-Strahlung auf den IR-Sensor richtet.

Um eine Aussage über die Lage von erfassten Bewegungen gewinnen zu können, sind die IR-Sensoren und/oder die Ihnen zugeordneten Multilinsen derart angeordnet, dass sich die Erfassungsbereiche von zumindest zwei der IR-Sensoren überlappen. Eine Bewegung, die in diesem Überlappgebiet erfolgt, führt zu einem Ansprechen aller Sensoren, die das Überlappgebiet erfassen können. Einem zeitlichen Verlauf der Messwerte der IR-Sensoren lässt sich also entnehmen, welche IR-Sensoren die Bewegung erfasst haben. Dies lässt aufgrund der durch die Sichtrichtung der IR-Sensoren und die Anordnung der IR-Linsen festgelegten räumlichen Erstreckung der verschiedenen Erfassungsbereiche einen Rückschluss auf die grobe Lage der Bewegung zu.

Zudem geben die IR-Sensoren auch die Signalstärke zur Auswertung weiter. Da auch diese von dem optischen Pfad abhängt, auf dem die IR-Strahlung in den IR-Sensor fällt, lassen sich auch durch die Auswertung aller zur gleichen Zeit gemessenen Signalstärken Informationen über die Lage der Bewegung gewinnen. Vor allem aufgrund der Tatsache, dass eine Mehrzahl von IR-Sensoren das gleiche Gebiet überwacht, lässt sich aus unterschiedlichen, gemessenen Signalstärken auf die Winkelposition der Bewegung schließen, d.h. es lässt sich ein Richtungsvektor von der Sensorvorrichtung, bzw. von den IR-Sensoren, zum Ort der Bewegung festlegen.

Die Verwendung von Multilinsen bzw. einer Vielzahl von Linsen hat hierbei den Effekt, dass eine hohe Ortsauflösung und damit eine Vielzahl von optischen Pfaden geschaffen werden. Dies verbessert die Möglichkeit, verschiedene gleichzeitig gemessene Signalstärken einer bestimmten Richtung zuzuordnen, da die verschiedenen optischen Pfade, bzw. das Einfallen von IR-Strahlung auf mehreren dieser Pfade, bei gleicher Ausgangsintensität der IR-Strahlung unterschiedliche Signalstärken an den Sensoren hervorrufen. Dadurch wird es einfacher, durch die Auswertung der Messwerte auf einen bestimmten Richtungsvektor zu schließen.

Die Sensorvorrichtung kann hierbei die Auswerteeinheit zum Bestimmen der Winkelposition selbst aufweisen, z.B. im gleichen Gehäuse oder ausgestaltet als System mit mehreren Einzelkomponenten. Die Auswerteeinheit kann aber auch außerhalb der Sensorvorrichtung liegen und von dieser nur die Messwerte der IR-Sensoren erhalten, z.B. mittels drahtloser Kommunikation oder über ein BUS-System, um daraus die Winkelposition zu bestimmen. Eine integrierte Auswerteeinheit bietet hierbei den Vorteil, ein von anderen Komponenten unabhängiges Sensorsystem bereitstellen zu können. Eine externe Auswerteeinheit erlaubt hingegen eine flexiblere Anwendung, z.B. in zentral gesteuerten Sensornetzwerken. Die Auswerteeinheit kann hierbei ein üblicher Prozessor sein.

Die Winkelposition kann basierend auf dem Verhältnis der Signalstärken der Infrarot-Sensoren bestimmt werden, die gleichzeitig eine Bewegung detektieren. Durch den direkten Vergleich zweier Signalstärken lässt sich in einfacher Weise ermitteln welcher Sensor eine höhere Strahlungsintensität gemessen hat, was wiederum Rückschlüsse auf den Ort der gemessenen Bewegung erlaubt.

Die Infrarot-Sensoren und die Multilinsenbereiche können derart angeordnet sein, dass die von den Infrarot-Sensoren gemessenen Signalstärken vom Einfallswinkel der Infrarot-Strahlen auf den zugeordneten Multilinsenbereich, insbesondere auf die darin enthaltenen Infrarot-Linsen, und vom Einfallswinkel der durch die Infrarot-Linsen abgelenkten Infrarot-Strahlung auf die Infrarot-Sensoren abhängt.

IR-Linsen dämpfen die durch sie durchtretende IR-Strahlung. Je länger der Weg durch eine IR-Linse ist, desto größer ist die Dämpfung und desto kleiner die Signalstärke, die durch die IR-Linse dringt. Fällt IR-Strahlung deshalb unter einem flachen Winkel auf die IR-Linse wird ein größerer Teil der Strahlung gedämpft, als wenn die IR-Strahlung nahezu senkrecht auf die IR-Linse fällt. IR-Strahlung, die aus einem Bereich auf die Linse gelangt, der nur unter einem flachen Einfallswinkel auf einen IR-Sensor abgebildet werden kann, während er unter einem weniger flachen Einfallswinkel auf einen anderen Sensor abgebildet wird, verursacht dadurch verschiedene Signalstärken auf den beiden IR-Sensoren. Dadurch lässt sich die Einfallsrichtung der IR-Strahlung rekonstruieren.

Dies kann weiter dadurch unterstützt werden, dass die IR-Sensoren einfallswinkelabhängige Empfindlichkeiten aufweisen. So lassen sich jedem optischen Pfad bestimmte Dämpfungscharakteristika beimessen (z.B. mittels einer Kalibration), die dann dazu verwendet werden können tatsächlichen Messwerten Richtungsvektoren zuzuordnen. Dies kann in der Auswerteeinheit z.B. mittels eines mathematischen Modells oder auch mittels einer Nachschlagetabelle geschehen. Auf diese Weise kann die Richtung von der Sensorvorrichtung zu einer detektierten Bewegung verlässlich bestimmt werden.

Die zumindest zwei Multilinsenbereiche können sich überlappen. Zum Beispiel können Infrarot-Linsen des einen Multilinsenbereichs auch Teil des anderen Multilinsenbereichs sein. Damit wird die gleiche Linse verwendet, um IR-Strahlung auf verschiedene IR-Sensoren abzubilden. Dadurch kann die Auflösung der Sensorvorrichtung verbessert werden, da jedem IR-Sensor eine größere Anzahl von IR-Linsen zur Verfügung steht, wenn diese im Übergangsbereich von einem IR-Sensor zum nächsten IR-Sensor von beiden IR-Sensoren verwendet wird.

Hierzu kann die Sensorvorrichtung z.B. eine Multilinse aufweisen, innerhalb derer die Multilinsenbereiche ausgebildet sind. Die Multilinsenbereiche sind dann durch sämtliche IR-Linsen definiert, die IR-Strahlung auf die zugeordneten IR-Sensoren abbilden. Diese Anordnung eignet sich insbesondere für kompakt angeordnete IR-Sensoren, die von einer gemeinsamen Multilinse umschlossen werden können.

Alternativ kann die Sensorvorrichtung eine Mehrzahl von Multilinsen aufweisen, von denen jede einen der Multilinsenbereiche aufweist. Dann hat jeder der Sensoren seine eigene Multilinse, deren IR-Linsen die einfallende IR-Strahlung auf ihn lenken. Diese Anordnung kann für vereinzelt stehende IR-Sensoren von Vorteil sein.

Die Infrarot-Linsen können derart angeordnet sein, dass sie einfallende Infrarot-Strahlung senkrecht auf die Infrarot-Sensoren richten. Die IR-Sensoren haben bei senkrechtem Einfall der IR-Strahlung die größte Empfindlichkeit. Durch einen senkrechten Einfall der IR-Strahlung, die zumindest von einem Teil der IR-Linsen auf den IR-Sensor gerichtet wird, lässt sich also die gemessene Signalstärke optimieren

Die Sensorvorrichtung kann des Weiteren ein Befestigungselement zum Befestigen der Sensorvorrichtung an einer Decke und eine Multilinse aufweisen, die die Multilinsenbereiche aufweist. Die Sensorvorrichtung weist hierbei vier Infrarot-Sensoren auf, die auf den Ecken eines Rechtecks angeordnet sind, das so ausgerichtet ist, dass es bei an der Decke befestigter Sensorvorrichtung parallel zu Decke liegt. Die Multilinse deckt hierbei die vier Infrarot-Sensoren ab und die Erfassungsbereiche aller vier Infrarot-Sensoren überlappen sich in einem Bereich der bei an der Decke befestigter Sensorvorrichtung unterhalb der Sensorvorrichtung liegt. In anderen Sichtbereichen der Sensorvorrichtung überlappen sich die Erfassungsbereiche von zumindest je zwei benachbarten Infrarot-Sensoren.

Durch das Vorsehen von vier IR-Sensoren kann der gesamte Raumbereich über 360° abgedeckt werden. Zudem kann der Sichtbereich der Sensorvorrichtung derart aufgeteilt werden, dass jede erfassbare Bewegung im Erfassungsbereich zweier IR-Sensoren liegt. Dadurch kann eine verlässliche Winkelbestimmung für jede Bewegung rund um die Sensorvorrichtung erreicht werden. Zudem ist durch den Überlapp aller Erfassungsbereiche unterhalb der Sensorvorrichtung, d.h. in einem Winkelbereich von ±10°, vorzugsweise ±5° oder ±1°, rund um die Senkrechte sichergestellt, dass dieser Bereich von Bereichen unterschieden werden kann, die neben der Sensorvorrichtung liegen, da dort nicht alle vier Sensoren gleichzeitig ansprechen.

Die Sichtrichtungen der Infrarotsensoren können hierbei von den Ecken des Rechtecks in Richtung des Inneren des Rechtecks gerichtet sein. Das heißt, einfallende IR-Strahlung fällt hauptsächlich auf die IR-Sensoren, die am weitesten von der Strahlungsquelle entfernt sind. Dadurch wird die Brennweite erhöht, wodurch sich wiederum das Auflösungsvermögen der einzelnen IR-Sensoren verbessert. Die IR-Sensoren können hierbei nach unten geneigt sein, damit ihr Sichtfeld nicht durch gegenüberliegende Sensoren blockiert wird.

Eine Leuchtenvorrichtung kann zumindest ein Leuchtmittel, eine Sensorvorrichtung wie sie oben beschrieben wurde und eine Steuervorrichtung aufweisen, die geeignet ist, das Leuchtmittel in Abhängigkeit von einer durch die Sensorvorrichtung detektierten Bewegung zu aktivieren. Die oben genannten Vorteile können also speziell für die Steuerung von Leuchten und Lampen eingesetzt werden. So können die Leuchten z.B. nur dann aktiviert werden, wenn eine Bewegung in einem bestimmten Winkelbereich festgestellt wurde. Dadurch kann eine flexiblere Leuchtensteuerung realisiert werden.

Die Erfindung wird im Folgenden mit Bezug auf die beigefügten Figuren näher beschrieben. Diese Beschreibung ist jedoch rein beispielhaft. Der Gegenstand der Erfindung ist allein durch die Ansprüche definiert. Es zeigt:
- **Fig. 1**: eine schematisch Darstellung einer Sensorvorrichtung;
- **Fig. 2**: eine weitere schematische Darstellung einer Sensorvorrichtung;
- **Fig. 3**: eine weitere schematische Darstellung einer Sensorvorrichtung; und
- **Fig. 4**: eine schematisch Darstellung einer Leuchtenvorrichtung.

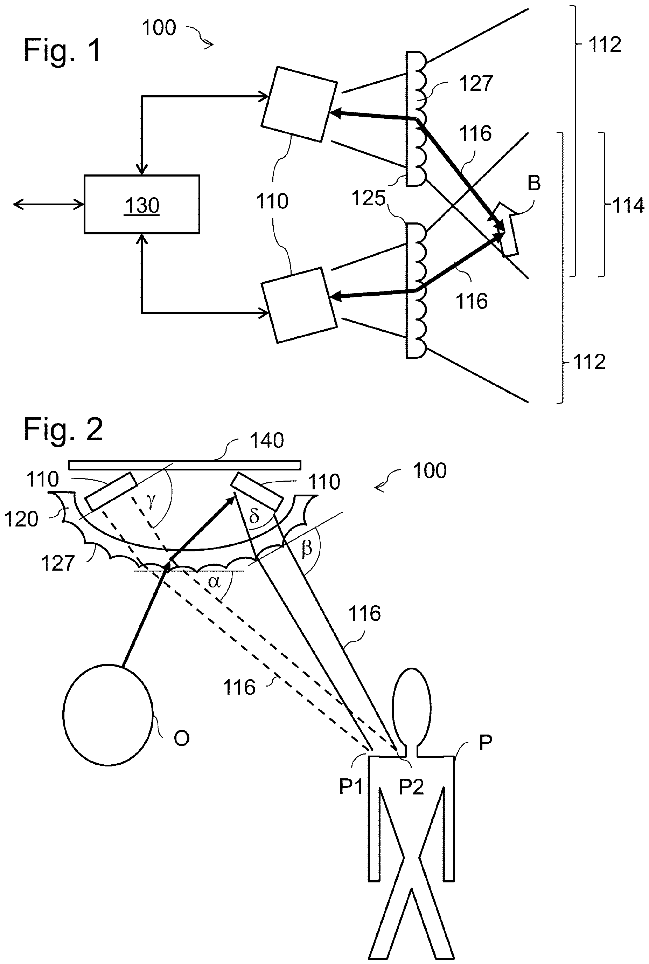

Die Fig. 1 zeigt schematisch eine Sensorvorrichtung 100 mit einer Mehrzahl von Infrarot-Sensoren 110 und einer diesen IR-Sensoren 110 zugeordneten Mehrzahl von Multilinsenbereichen 125. Wie in der Fig. 1 gezeigt sind zumindest zwei IR-Sensoren 110 und dementsprechend zwei Multilinsenbereiche 125 vorhanden. Darüber hinaus kann eine im Prinzip beliebige Anzahl von weiteren IR-Sensoren 110 und Multilinsenbereichen 125 verwendet werden.

Bei den IR-Sensoren 110 kann es sich um PIR-Sensoren handeln, die von einem Objekt abgestrahlte Infrarot-Strahlung detektieren können. Vorzugsweise handelt es sich bei den IR-Sensoren 110 um pyroelektrische Sensoren, die über zwei Sensorflächen die Temperaturen bzw. die entsprechende IR-Strahlung von zwei benachbarten Punkten im Raum messen können und aus der Veränderung der Differenz der so gemessenen Signale auf eine Bewegung schließen können. Derartige IR-Sensoren 110 sind einem Fachmann bekannt. Ihre Funktionsweise braucht deshalb an dieser Stelle nicht weiter ausgeführt werden.

Jedem der IR-Sensoren 110 ist einer der Multilinsenbereiche 125 zugeordnet, um IR-Strahlung auf den entsprechenden IR-Sensor 110 zu leiten. Die Multilinsenbereiche 125 bestehen aus einer Reihe von IR-Linsen 127, die geeignet sind IR-Strahlung abzulenken. Die IR-Linsen 127 bzw. die aus ihnen bestehenden Multilinsenbereiche 125 sind z.B. aus HDPE ("High Densitiy Polyethylen") gefertigt. Die IR-Linsen 127 sind in den Multilinsenbereichen 125 dicht gepackt, z.B. mit einer Linsenanzahl von 5 bis 50 Linsen pro cm². Die IR-Linsen 127 können hierbei jede beliebige aus dem Stand der Technik bekannte Form annehmen und z.B. als Fresnel-Linsen, Konvexlinsen oder Konkavlinsen ausgestaltet sein. In einer Sensorvorrichtung 100 können z.B. zwischen 200 und 1.000 Linsen verwendet werden, z.B. 400 Linsen.

Jede der IR-Linsen 127 bildet dabei den Sichtbereich eines zugehörigen IR-Sensors 110 auf ein anderes Raumelement ab. Der typischerweise einem Pyramidenstumpf entsprechende Sichtbereich eines IR-Sensors 110 wird durch die in dem Multilinsenbereich 125 enthaltenen IR-Linsen 127 also in eine Vielzahl von unterschiedlichen Sichtstrahlen aufgeteilt. Anders ausgedrückt definiert jede IR-Linse 127 einen anderen optischen Pfad 116 auf dem IR-Strahlung auf einen IR-Sensor 110 gelenkt wird. Auf diese Weise definieren die Multilinsenbereiche 125 Erfassungsbereiche 112 im Raum, in denen ein IR-Sensor 110 eine Bewegung erfassen kann. Im Bild der Sichtstrahlen ist ein Erfassungsbereich 112 also der Bereich, der durch die von einem IR-Sensor 110 ausgehenden Sichtstrahlen abgedeckt wird. Die Sensorvorrichtung 100 kann zwischen 2.000 und 10.000 Sichtstrahlen aufweisen, z.B. etwa 5.000 Sichtstrahlen.

Die Multilinsenbereiche 125 sind dabei derart angeordnet, dass sich die Erfassungsbereiche 112 der zumindest zwei IR-Sensoren 110 in einem Überlappgebiet 114 überlappen. Eine Bewegung (in der Fig. 1 mit dem Pfeil B gekennzeichnet), die im Überlappgebiet 114 stattfindet wird also von beiden IR-Sensoren 110 erfasst. Die von dem sich bewegenden Objekt ausgestrahlte IR-Strahlung gelangt dabei über zwei verschiedene optische Pfade 116 auf die IR-Sensoren 110, die durch die jeweiligen Multilinsenbereiche 125 definiert sind.

Aufgrund der unterschiedlichen Entfernung der Bewegung von den IR-Sensoren 110 und den zugeordneten Multilinsenbereichen 125 weisen die verschiedenen optischen Pfade 116 verschiedene Längen auf. Zudem wird die Länge der optischen Pfade 116 durch die Einfallsrichtung auf die Multilinsenbereiche 125 beeinflusst, da diese die Ablenkung der IR-Strahlung durch die IR-Linsen 127 bestimmt. Dadurch detektieren die IR-Sensoren 110, die bei Bewegungen im Überlappgebiet 114 anschlagen, verschiedene Signalstärken. Aus dem zeitlichen Verlauf der gemessenen Signale lässt sich zudem ablesen, welche IR-Sensoren (etwa) zur gleichen Zeit eine Bewegung wahrgenommen haben.

Dadurch ist es möglich, die Lage der Bewegung relativ zu den IR-Sensoren 110 zu bestimmen, d.h. es kann ein Richtungsvektor berechnet werden, der von der Sensorvorrichtung 100 bzw. den IR-Sensoren 110 auf den Ort der Bewegung weist.

Zum einen gibt bereits die Tatsache, dass zwei IR-Sensoren 110 (ungefähr) zur gleichen Zeit ein Signal gemessen haben Aufschluss darüber, dass eine Bewegung im Überlappgebiet 114 stattgefunden hat. Da die Erfassungsbereiche 112 der verschiedenen IR-Sensoren 110 und damit auch das (oder die) Überlappgebiet(e) 114 von der durch die Multilinsenbereiche 125 vorgegebenen Strahlgeometrie der Sichtstrahlen definiert sind, lässt sich aus dem gemeinsamen Anschlagen zweier (oder mehrerer) IR-Sensoren 110 der Ort der Bewegung bereits auf ein entsprechendes Überlappgebiet 114 eingrenzen.

Zudem können die von allen beteiligten IR-Sensoren 110 gemessenen Signalstärken herangezogen werden, um den Richtungsvektor noch genauer zu bestimmen. Die von einem PIR-Sensor gemessene Signalstärke ist zwar kein verlässliches Indiz für die Entfernung eines sich bewegenden Objekts, aber aus dem Verhältnis der Stärke zweier (nahezu) gleichzeitig gemessenen Signal lässt sich zumindest die Richtung in der die Bewegung stattgefunden hat feststellen.

Hierzu werden die von den IR-Sensoren 110 gemessenen Signale an eine Auswerteeinheit 130 gesendet. Bei der Auswerteeinheit 130 kann es sich um einen gewöhnlichen Prozessor handeln. Die Auswerteeinheit 130 kann hierbei direkt in der Sensorvorrichtung 100 angeordnet sein, also z.B. in oder an einem Gehäuse der Sensorvorrichtung 100. Die Auswerteeinheit 130 kann die Messwerte der IR-Sensoren 110 aber auch über drahtlose oder drahtgebundene Kommunikation erhalten, z.B. über WLAN, Bluetooth oder ein BUS-System. In diesem Fall kann z.B. ein gewöhnlicher Computer die Messwerte von einer oder auch mehreren Sensorvorrichtungen 100 zentral verwalten und auswerten. Dies kann für ein Sensornetzwerk von Vorteil sein.

Die Auswerteeinheit 130 berechnet aus den erhaltenen Signalstärken und dem zeitlichen Verlauf einen Richtungsvektor für die jeweils detektierten Bewegungen. Die Auswerteeinheit 130 kann dabei gemäß eines deterministischen mathematischen Modells einen bestimmten Richtungsvektor pro Zeitintervall ausgeben. Es kann aber auch innerhalb eines Wahrscheinlichkeitsmodells die wahrscheinlichste Richtung bestimmt werden. Für die Bestimmung der Richtung können Konsistenzüberlegungen einer Rolle spielen, wie etwa ob in früheren Zeitschritten ermittelte Richtungsvektoren den aktuell ermittelten Richtungsvektor plausibel erscheinen lassen.

Die Bestimmung des Richtungsvektors kann zudem auf einer Kalibration der Sensorvorrichtung beruhen, in der Messwerte mit unter vorgegebenen Richtungen ausgeführten Bewegungen in Korrelation gesetzt werden. Auf diese Weise können sich z.B. Nachschlagetabellen erstellen lassen, die für ein bestimmtes Verhältnis von Signalstärken einen bestimmten Richtungsvektor angeben.

Alternativ oder zusätzlich kann die Auswerteeinheit 130 eine mathematische Modellierung der Multilinsenbereiche 125 und der IR-Sensoren 110 verwenden, um darauf basierend verschiedene Strahlgänge für einfallende IR-Strahlung und die daraus resultierenden Signalstärken mit den tatsächlich gemessenen Signalstärken zu vergleichen und daraus einen Richtungsvektor zu bestimmen bzw. eine Wahrscheinlichkeit für eine bestimmte Richtung anzugeben.

Dies kann z.B. anhand der in der Fig. 2 dargestellten Modellierung geschehen. In der Fig. 2 ist eine Sensorvorrichtung 100 gezeigt, die mittels eines Befestigungselements 140 an einer Decke oder dergleichen im Wesentlichen parallel zur Erdoberfläche befestigt ist.

Die Sensorvorrichtung 100 weist die oben beschriebenen zumindest zwei IR-Sensoren 110 auf, die beide Sichtbereiche nach schräg unten haben. Die beiden den IR-Sensoren 110 zugeordneten Multilinsenbereiche 125 sind in der Fig. 2 in einer Multilinse 120 integriert, die alle IR-Sensoren 110 abdeckt, die also z.B. auch also Gehäuse für die IR-Sensoren 110 und die damit verbundene Elektronik dient. Die Multilinse 120 weist die IR-Linsen 127 auf, die die verschiedenen Multilinsenbereiche 125 formen.

Die IR-Sensoren 110 sind in der Fig. 2 als pyroelektrische Elemente ausgebildet, d.h. jeder IR-Sensor 110 weist zwei sensitive Flächen auf, die IR-Strahlung detektieren können. Durch die Multilinse 120 werden diese beiden Sensorflächen von jeder IR-Linse 127 auf zwei benachbarte Raumelemente abgebildet, so dass jeder IR-Sensor 110 einen Temperatur- bzw. Strahlungsgradienten im Raum erfassen kann. Diese Situation ist in der Fig. 2 durch die jeweils zwei auf die IR-Sensoren 110 laufenden optischen Pfade 116 symbolisiert.

Von Interesse ist die Situation in der beide IR-Sensoren 110 ein Raumelement betrachten, dass in dem Überlappgebiet 114 liegt. Im Beispiel der Fig. 2 ist dies die Schulterpartie einer Person P. Jeder der IR-Sensoren 110 empfängt also IR-Strahlung aus den beiden benachbarten Punkten P1 und P2. Dies ist in der Fig. 2 dadurch symbolisiert, dass sowohl von P1 als auch von P2 eine durchgezogene Linie zum rechten IR-Sensor 110 und eine gestrichelte Linie zum linken IR-Sensor 110 laufen. Diese Linien repräsentieren die optischen Pfade auf denen IR-Strahlung von den Punkten P1 und P2 auf die IR-Sensoren 110 trifft.

Der linke IR-Sensor 110 empfängt dabei Strahlung, die unter einem flachen Winkel α auf die IR-Linsen trifft. Der Weg den die IR-Strahlung durch die Multilinse 120 zurücklegen muss, ist daher vergleichsweise lang. Die IR-Strahlung erfährt also eine gewisse Dämpfung, durch die die Signalstärke reduziert wird. Dafür fällt die IR-Strahlung unter dem nahezu rechten Winkel γ auf den linken IR-Sensor 110. Dies entspricht nahezu maximaler Sensitivität, so dass die Signalstärke nach Durchdringen der Multilinse 120 nicht mehr reduziert wird.

Der rechte IR-Sensor 110 liegt näher an der Person P. Die optischen Pfade 116 von den Punkten P1 und P2 zum rechten IR-Sensor 110 sind also kürzer als zum linken IR-Sensor 110. Dadurch ist die Signalstärke im Prinzip höher. Die IR-Strahlung fällt nahezu senkrecht unter dem Winkel β auf die Multilinse 120. Der Weg durch die Multilinse 120 ist also vergleichsweise kurz, die erfahrene Dämpfung daher kleiner als auf dem optischen Pfad 116 zum linken IR-Sensor 110. Der Einfall auf den rechten IR-Sensor 110 geschieht jedoch unter dem flachen Winkel δ, wodurch es zu einer Abschwächung des gemessenen Signals kommt.

Es gehen also verschiedene Parameter in die tatsächlich von den IR-Sensoren 110 gemessenen Signalstärken ein. In der Modellierung der Fig. 2 sind dies die Längen der optischen Pfade 116, die Einfallswinkel α und β der Strahlung auf die Multilinse, die Dämpfung in der Multilinse 120 und die Einfallswinkel γ und δ auf die IR-Sensoren 110 und die damit einhergehende Sensitivität der IR-Sensoren 110. Hierbei ist vorteilhaft, wenn die Winkel γ und δ für alle Einfallsrichtungen möglichst nah an 90° liegen, um möglichst große Signalstärken erfassen zu können.

Es ist zudem möglich, weitere Parameter zu verwenden, um ein möglichst genaues Modell für die gemessenen Signalstärken zu erhalten. Ausschlaggebend ist hierbei, dass sämtliche Parameter es erlauben, für IR-Strahlung aus einem bestimmten Raumwinkel an den IR-Sensoren 110 zu erwartende Signalstärken zu berechnen. Diese können dann mit den tatsächlich gemessenen Signalstärken verglichen werden, um dadurch den Raumwinkel festzulegen, aus dem die IR-Strahlung kam.

Auf diese Weise kann durch mathematische Modellierung der Sensorvorrichtung 100 ein Richtungsvektor bestimmt werden, der angibt, wo relativ zu den vorhandenen IR-Sensoren 110 eine Bewegung stattfindet.

In der Fig. 2 wurde hierbei ein Beispiel verwendet, bei der eine einzelne Multilinse 120 verwendet wird, deren Teilbereiche die Multilinsenbereiche 125 bilden. Die IR-Sensoren 110 sind in diesem Fall kompakt in einer Einheit angeordnet. Wie in der Fig. 1 gezeigt, können aber auch mehrere Multilinsen verwendet werden, die vereinzelt angeordneten IR-Sensoren 110 zugeordnet sind. Dies erlaubt es z.B. mehrere einzelne IR-Sensoren 110 in Zimmerecken anzuordnen und die Messwerte der IR-Sensoren 110 in einer zentralen Auswerteeinheit 130 zu sammeln. Auf diese Weise können von einer einzigen Stelle nicht zu überblickende Räumlichkeiten dennoch in der oben beschriebenen Weise überwacht werden. Zudem ist es möglich, bestehende Sensorsysteme nachzurüsten, indem Schnittstellen für die Messdatenausgabe geschaffen und eine Kalibrierung und/oder Modellierung der verwendeten Sensoren durchgeführt wird.

Als weitere Alternative können anstatt der IR-Linsen auch andere optische Elemente verwendet werden, die eine Unterscheidung der optischen Pfade zu verschiedenen IR-Sensoren anhand der gemessenen Signalstärke erlauben.

Werden Multilinsen 120 verwendet, die mehrere IR-Sensoren 110 abdecken, kann es von Vorteil sein, dass mehrere IR-Sensoren 110 IR-Strahlung von den gleichen IR-Linsen 127 empfangen. So können in der Fig. 2 die IR-Linsen 127, die IR-Strahlung von der Person P auf den linken IR-Sensor 110 leiten, IR-Strahlung vom Objekt O auf den rechten IR-Sensor 110 leiten, wie durch die schwarzen Pfeile angedeutet. Die Multilinsenbereiche 125, die den IR-Sensoren 110 zugeordnet sind, können auf diese Weise überlappen. Dies hat den Vorteil, dass die Anzahl der von jedem IR-Sensor 110 verwendbaren IR-Linsen 127 steigt, wodurch sich die Auflösung jedes einzelnen IR-Sensors 110 erhöht.

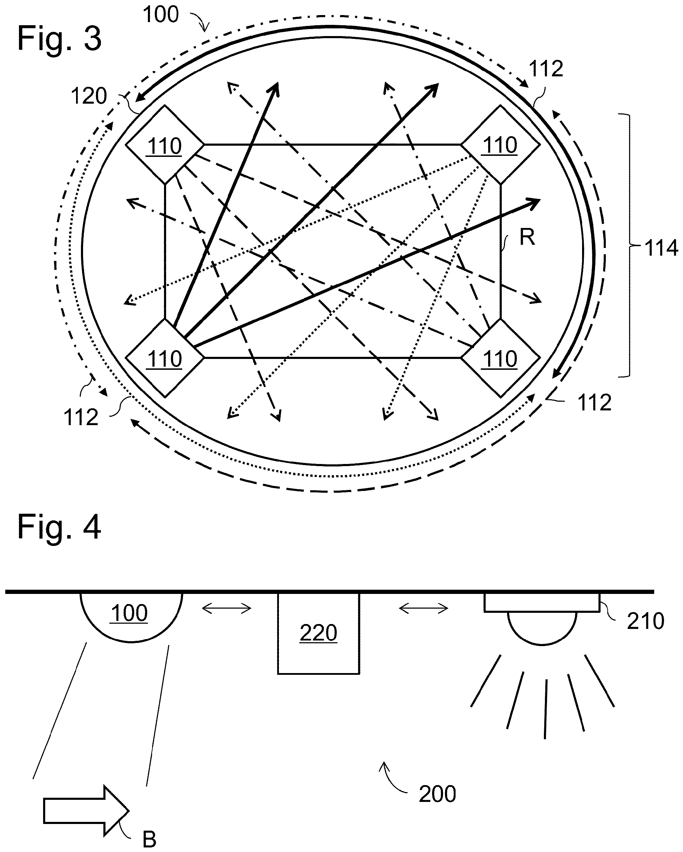

Ein weiteres Beispiel für eine Sensorvorrichtung 100 mit einer einzigen Multilinse 120 mit überlappenden Multilinsenbereichen 125 ist in der Fig. 3 gezeigt.

Die Sensorvorrichtung 100 der Fig. 3 weist vier IR-Sensoren 110 auf, die auf den Ecken eines (virtuellen) Rechtecks R oder Quadrats angeordnet sind. Die Sensorvorrichtung 100 ist hierbei für die Deckenmontage vorgesehen. Im montierten Zustand liegt das Rechteck R parallel zur Decke. Die Multilinse 120 überdeckt sämtliche IR-Sensoren 110 und gegebenenfalls alle weiteren Komponenten der Sensorvorrichtung 100. Die Multilinse 120 kann hierbei als Halbkugel bzw. Halbellipse ausgebildet sein.

Die IR-Sensoren 110 sind hierbei derart angeordnet, dass sie Bewegungen im gesamten Halbraum unterhalb der Decke erfassen können, zumindest aber in einem Bereich von ±80°, 70° oder 60° um die Senkrechte. Erfassungsbereiche 112 der IR-Sensoren 110 sind dabei derart angeordnet, dass jeweils zumindest zwei IR-Sensoren 110 Überlappgebiete 114 in einem Außenbereich aufweisen, d.h. in einem Bereich, der nicht unterhalb der IR-Sensoren 110 liegt. Dadurch kann auf die oben beschriebene Art und Weise für den gesamten Halbraum bestimmt werden in welcher Richtung detektierte Bewegungen stattgefunden haben.

Wie in der Fig. 3 gezeigt kann es vorteilhaft sein, wenn die IR-Sensoren 110 derart ausgerichtet sind, dass sie in das Innere des Rechtecks R blicken. Auf die IR-Sensoren 110 treffende IR-Strahlung passiert dann den Bereich des Rechtecks R. Die IR-Sensoren 110 sind hierbei vorteilhafter Weise auch nach unten geneigt, wie z.B. in der Fig. 2 gezeigt, die auch als Querschnitt durch die Sensorvorrichtung 100 der Fig. 3 verstanden werden kann.

Die Sichtrichtungen der IR-Sensoren 110 sind in der Fig. 3 durch Pfeile mit verschiedenen Strichtypen gekennzeichnet. Die entsprechenden, durch die Multilinse 120 vermittelten Erfassungsbereiche 112 sind in den gleichen Strichtypen außerhalb der Multilinse angedeutet. Sämtliche IR-Sensoren 110 können den Bereich unterhalb der Sensorvorrichtung 100 erfassen. Dies ist in der Fig. 3 durch das Kreuzen sämtlicher Sichtstrahlen in der Mitte des Rechtecks R angedeutet. Der Bereich unterhalb der Sensorvorrichtung 100 ist also vom Außenbereich dadurch unterschieden, dass hier sämtliche IR-Sensoren 110 auf eine Bewegung ansprechen. Dies ermöglicht auch eine rudimentäre Entfernungsbestimmung, da aus dem Ansprechen der verschiedenen IR-Sensoren 110 klar wird, ob sich ein Objekt unterhalb der Sensorvorrichtung 100 befindet oder nicht.

Mit einer Sensorvorrichtung 100 wie sie in der Fig. 3 gezeigt ist, lassen sich also in verlässlicher Weise Messdaten generieren, die zur Lagebestimmung einer detektierten Bewegung in einem die Sensorvorrichtung 100 umgebenden Halbraum verwendet werden können.

Ein mögliches Einsatzgebiet für oben beschriebene Sensorvorrichtungen ist in der Fig. 4 gezeigt, in der die Sensorvorrichtung 100 Teil einer Leuchtenvorrichtung 200 ist.

Die Sensorvorrichtung 100 wird hierbei wie oben beschrieben dazu verwendet eine Bewegung zu erfassen, die in der Fig. 4 mit dem Pfeil B gekennzeichnet ist. Die (gegebenenfalls bereits ausgewerteten) Messdaten der Sensorvorrichtung 100 werden an eine Steuervorrichtung 220 der Leuchtenvorrichtung 200 übermittelt. Sind die Messdaten noch nicht ausgewertet, kann die Steuervorrichtung 220 als Auswerteeinheit 130 fungieren und die Lage der Bewegung ermitteln. Basierend auf den ausgewerteten Messdaten steuert die Steuervorrichtung 220 zumindest ein Leuchtmittel 210. Zum Beispiel kann das Leuchtmittel 210 nur dann aktiviert werden, wenn eine Bewegung in einer bestimmten Richtung erfasst wurde. Dies ermöglicht das selektive Schalten von Beleuchtungen je nach dem Winkel unter dem eine Bewegung erfasst wurde. Die Leuchtenvorrichtung 200 kann hierbei auch eine Mehrzahl von Sensorvorrichtungen 100 und/oder von Leuchtmitteln 210 aufweisen, um so ein höchst flexibel steuerbares Netz von Leuchtmitteln 210 bereitstellen.

Die Kommunikation zwischen den einzelnen Komponenten der Leuchtenvorrichtung 200 kann hierbei, wie in der Fig. 4 gezeigt, drahtlos erfolgen. Ebenso ist aber auch eine Datenübermittlung mittels gewöhnlicher Kabel oder in einem BUS-System möglich. Die verschiedenen Komponenten der Leuchtenvorrichtung 200 müssen hierbei nicht sämtlich an einer Decke, sondern können beliebig in einem Raum angeordnet sein, z.B. auch in oder an den Wänden, dem Fußboden oder dergleichen.

Schlussendlich kann die Leuchtenvorrichtung 200 auch als kompakte Einheit ausgebildet sein, z.B. als Einzelleuchte, die Leuchtmittel 210, Steuervorrichtung 220 und Sensorvorrichtung 100 aufweist. Dies ermöglicht es, die oben genannten Vorteile einer richtungsbasierten Leuchtensteuerung auch in einem autarken Einzelsystem nutzen zu können.

Obwohl in der Fig. 4 die Steuerung eines Leuchtmittels 210 gezeigt ist, kann alternativ jedes Gerät mit der Sensorvorrichtung 100 richtungsabhängig gesteuert werden, dass in üblicher Weise mittels eines Bewegungsmelders gesteuert werden kann. Dies ermöglicht eine allgemeine Verwendung richtungsabhängiger Bewegungsmelder.

## Patentansprüche

1. Sensorvorrichtung (100) zum Detektieren einer Bewegung, aufweisend
mindestens zwei Infrarot-Sensoren (110) zum Erfassen von Bewegungen; und
mindestens zwei Multilinsenbereiche (125) mit einer Mehrzahl von Infrarot-Linsen (125), die jeweils einem Infrarot-Sensor (110) zugeordnet sind; wobei
Erfassungsbereiche (112) der Infrarotsensoren (110) über die Mehrzahl der Infrarot-Linsen (127) der zugeordneten Multilinsenbereiche (125) auf die jeweiligen Infrarot-Sensoren (110) abgebildet werden;
sich die Erfassungsbereiche (112) der zumindest zwei Infrarot-Sensoren in einem Überlappgebiet (114) überlappen und Infrarot-Strahlung aus dem Überlappgebiet (114) entlang unterschiedlicher optischer Pfade (116) auf die zumindest zwei Infrarot-Sensoren (110) fällt;
die Infrarot-Sensoren (110) geeignet sind, durch eine Bewegung im Überlappgebiet (114) erzeugte Messwerte an eine Auswerteeinheit (130) zu übermitteln, die anhand der von den einzelnen Infrarot-Sensoren (110) gemessenen Signalstärken und deren zeitlichem Verlauf eine Winkelposition des Ortes der Bewegung relativ zu den zumindest zwei Infrarot-Sensoren (110) bestimmt.

2. Sensorvorrichtung (100) nach Anspruch 1, des Weiteren mit
der Auswerteeinheit (130) zum Bestimmen der Winkelposition.

3. Sensorvorrichtung (100) nach einem der vorherigen Ansprüche, wobei
die Winkelposition basierend auf dem Verhältnis der Signalstärken der Infrarot-Sensoren (110) bestimmt wird, die gleichzeitig eine Bewegung detektieren.

4. Sensorvorrichtung (100) nach einem der vorherigen Ansprüche, wobei
die Infrarot-Sensoren (110) und die Multilinsenbereiche (125) derart angeordnet sind, dass die von den Infrarot-Sensoren (110) gemessenen Signalstärken vom Einfallswinkel (α, β) der Infrarot-Strahlen auf den zugeordneten Multilinsenbereich (125), insbesondere auf die darin enthaltenen Infrarot-Linsen (127), und vom Einfallswinkel (γ, δ) der durch die Infrarot-Linsen (127) abgelenkten Infrarot-Strahlung auf die Infrarot-Sensoren (110) abhängt.

5. Sensorvorrichtung (100) nach einem der vorherigen Ansprüche, wobei
sich die zumindest zwei Multilinsenbereiche (125) überlappen, da Infrarot-Linsen (127) zu beiden Multilinsenbereichen gehören.

6. Sensorvorrichtung (100) nach einem der vorherigen Ansprüche, des Weiteren aufweisend
eine Multilinse (120), die die Multilinsenbereiche (125) aufweist; oder
eine Mehrzahl von Multilinsen, von denen jede einen der Multilinsenbereiche (125) aufweist.

7. Sensorvorrichtung (100) nach einem der vorherigen Ansprüche, wobei
die Infrarot-Linsen (127) derart angeordnet sind, dass sie einfallende Infrarot-Strahlung senkrecht auf die Infrarot-Sensoren (110) richten.

8. Sensorvorrichtung (100) nach einem der vorherigen Ansprüche, des Weiteren aufweisend
ein Befestigungselement (140) zum Befestigen der Sensorvorrichtung (100) an einer Decke; und
eine Multilinse (120), die die Multilinsenbereiche (125) aufweist; wobei
die Sensorvorrichtung (100) vier Infrarot-Sensoren (110) aufweist, die auf den Ecken eines Rechtecks (R) angeordnet sind, das so ausgerichtet ist, dass es bei an der Decke befestigter Sensorvorrichtung (100) parallel zu Decke liegt;
die Multilinse (120) die vier Infrarot-Sensoren (110) abdeckt;
die Erfassungsbereiche (112) aller vier Infrarot-Sensoren (110) in einem Bereich überlappen, der bei an der Decke befestigter Sensorvorrichtung (100) unterhalb der Sensorvorrichtung (100) liegt, und in anderen Sichtbereichen der Sensorvorrichtung (100) die Erfassungsbereiche (112) von zumindest je zwei benachbarten Infrarot-Sensoren (110) überlappen.

9. Sensorvorrichtung (100) nach Anspruch 8, wobei
Sichtrichtungen der Infrarotsensoren (110) von den Ecken des Rechtecks (R) in Richtung des Inneren des Rechtecks (R) gerichtet sind.

10. Leuchtenvorrichtung (200) mit
zumindest einem Leuchtmittel (210);
der Sensorvorrichtung (100) nach einem der vorherigen Ansprüche;
und einer Steuervorrichtung (220), die geeignet ist, das Leuchtmittel (210) in Abhängigkeit von einer durch die Sensorvorrichtung (100) detektierten Bewegung zu aktivieren.
